# EUROPÄISCHE PATENTSCHRIFT

(11) **EP 2 090 481 B1**
(45) Veröffentlichungstag und Bekanntmachung des Hinweises auf die Patenterteilung: **06.11.2013**
(21) Anmeldenummer: 09001903.5
(22) Anmeldetag: 11.02.2009
(51) Int. Cl.: B60T 8/32, B60T 8/94, B60T 7/10, B60T 7/20, B60T 8/88, B60T 13/26, B60T 13/68, B60T 8/17, B60T 13/66

(54) **Elektronisch geregeltes Bremssystem mit redundanter Steuerung der Bremsaktuatoren**
Electronically controlled braking system with redundant brake actuator control
Système de freinage à commande électronique doté d'une commande redondante des actionneurs de freinage

(30) Priorität: 14.02.2008 DE 102008009043
(43) Veröffentlichungstag der Anmeldung: 19.08.2009
(73) Patentinhaber: KNORR-BREMSE Systeme für Nutzfahrzeuge GmbH, 80809 München (DE)
(72) Erfinder: Steinberger, Jürgen, 82178 Puchheim (DE); Frank, Péter, 1112 Budapest (HU); Széll, Péter, 1163 Budapest (HU)
(74) Vertreter: Schönmann, Kurt

(56) Entgegenhaltungen:
- EP-A1- 1 122 142
- EP-A2- 1 541 437

## Beschreibung

### Stand der Technik

Die Erfindung betrifft ein elektronisch geregeltes Bremssystem eines für den Anhängerbetrieb vorgesehenen Zugfahrzeugs, welches mindestens einen ersten elektrischen Bremssteuerkreis und einen zweiten elektrischen Bremssteuerkreis umfasst, gemäß Anspruch 1.

Ein solches elektronisch geregeltes Bremssystem beinhaltet in der Regel ein Fußbremsmodul, welches in einem oder mehreren Kanälen durch Sensoren die elektronischen Sollwerte für die Bremskraftregelung erfasst und in ein oder mehrere elektronische zentrale Steuergeräte einsteuert. Parallel hierzu werden in dem Fußbremsmodul z.B. pneumatische Steuerdrücke für den Fall erzeugt, dass die elektrische Regelung ausfällt. Die Steuergeräte steuern basierend auf den Sollwerten beispielsweise elektro-pneumatische Druckregelmodule elektrisch an, welche die Schnittstelle zwischen den elektrischen Bremskreisen und der pneumatischen Bremskraft bilden. Sie setzen die elektrischen Steuerbefehle der Steuergeräte in pneumatische Drücke um. Die Umsetzung erfolgt mit Proportionalmagneten oder mit einer Kombination von Ein-/Auslassmagnetventilen. Ein integrierter Drucksensor misst den vom Druckregelmodul ausgesteuerten Bremsdruck. Somit kann eine Bremsdruckregelung in einem geschlossenen Regelkreis stattfinden. Ein elektrisch gesteuertes Backup-Ventil sperrt die vom Fußbremsmodul parallel zu den elektrischen Sollwerten erzeugten pneumatischen Steuerdrücke des Fußbremsmoduls ab, um eine hiervon nicht beeinflusste elektrische Druckregelung zu ermöglichen. Unter "elektro-pneumatisch" bzw. "elektro-hydraulisch" wird im folgenden eine Einheit verstanden, in welche elektrische Steuersignale eingesteuert werden, um diese in pneumatische oder hydraulische Signale bzw. Steuerdrücke bzw. Bremsdrücke umzusetzen.

Bei einem für den Anhängerbetrieb vorgesehenen Zugfahrzeug ist weiterhin im Zugfahrzeug ein elektro-pneumatisches Anhängersteuermodul vorhanden, welches eine Steuerung oder Regelung des Anhängerbremsdrucks ermöglicht. Das Umsetzen des elektronisch vorgegebenen Sollwerts in einen ausgesteuerten Druck erfolgt dabei mit einer ähnlichen Magnetventilanordnung wie in einem oben beschriebenen Druckregelmodul. Das Ansteuern des Anhängersteuermoduls muss mit zwei unabhängigen Steuersignalen erfolgen. Dies kann beispielsweise ein elektrisches Signal und ein pneumatisches oder hydraulisches Signal sein.

Ein gattungsgemäßes elektronisches Bremssystem ist aus der DE 10 2005 062 907 B3 bekannt. Es besteht aus zwei unabhängigen elektrischen Bremssteuerkreisen, von welchen jeder Bremssteuerkreis jeweils eine Bremse der Vorderachse und der Hinterachse des Fahrzeugs in Diagonalanordnung ansteuert. Jeder der beiden Bremssteuerkreise beinhaltet ein elektronisches Steuergerät zur Ansteuerung von radnah angeordneten Bremsaktuatoren in Form von Druckregelmoduln.

Im einzelnen weist bei dem bekannten elektronischen Bremssystem der erste elektrische Bremssteuerkreis ein erstes elektronisches Steuergerät, einen ersten Kanal eines elektronischen Bremspedals sowie eine erste Energieversorgung und der zweite elektrische Bremssteuerkreis ein zweites elektronisches Steuergerät, einen zweiten Kanal des elektronischen Bremspedals sowie eine von der ersten Energieversorgung unabhängige zweite Energieversorgung auf. Das erste elektronische Steuergerät ist von der ersten Energieversorgung und das zweite elektronische Steuergerät von der zweiten Energieversorgung versorgt und die beiden elektronischen Steuergeräte sind zum Informationsaustausch und Überwachung der Funktion der Bremssteuerkreise verbunden und ausgebildet. Weiterhin ist das erste Steuergerät an den ersten Kanal des elektronischen Bremspedals und das zweite Steuergerät an den zweiten Kanal des elektronischen Bremspedals zum Einsteuern von Bremsanforderungssignalen angeschlossen. Das erste Steuergerät steuert wenigstens einen ersten, beispielsweise elektro-pneumatischen Bremsaktuator und das zweite Steuergerät wenigstens einen zweiten, beispielsweise elektro-pneumatischen Bremsaktuator an, wobei die Bremsaktuatoren jeweils mindestens eine zugeordnete Bremskrafterzeugungseinrichtung mit Bremsdruck versorgen. Nicht zuletzt ist ein von dem ersten elektronischen Steuergerät angesteuertes, beispielsweise elektro-pneumatisches Anhängersteuermodul zum Steuern der Anhängerbremse vorgesehen.

Wenn bei dem bekannten Bremssystem ein elektrischer Bremskreis oder ein Bremsaktuator einen elektrischen Fehler aufweist, kann das Steuergerät des verbleibenden funktionsfähigen Bremskreises die verbleibenden funktionsfähigen Bremsaktuatoren weiterhin ansteuern. Dazu ist eine pneumatische Verbindung zwischen Rädern einer Achse zugeordneten Druckregelmoduln vorhanden, um das einem Rad zugeordnete, von dem ausgefallenen elektrischen Bremskreis nicht mehr steuerbare Druckregelmodul durch das dem anderen Rad zugeordnete und von dem funktionsfähigen elektrischen Bremskreis gesteuerte Druckregelmodul pneumatisch zu steuern. Ein solcher Aufbau ist jedoch nur bei Bremssystemen möglich, welche ein Druckregelmodul je Rad bzw. ein zweikanaliges Druckregelmodul je Achse aufweisen.

Das Dokument EP 1 541 437 A2 offenbart die Merkmale des Oberbegriffs des unabhängigen Anspruchs 1.

### Aufgabe der Erfindung

Die Aufgabe der Erfindung besteht darin, ein elektronisch geregeltes Bremssystem der eingangs erwähnten Art derart weiterzubilden, dass es auch bei Bremssystemen, welche an einer Achse nur über einen einkanaligen Druckregelmodul verfügen, eine hohe funktionale Sicherheit gewährleistet.

Diese Aufgabe wird gemäß der Erfindung durch die Merkmale von Anspruch 1 gelöst.

### Offenbarung der Erfindung

Die Erfindung verwirklicht erstmalig ein elektronisch geregeltes Bremssystem, bei dem
- ein von einem elektronischen Steuergerät gesteuertes Parkbremsmodul zum Steuern einer der Parkbremse zugeordneten Bremskrafterzeugungseinrichtung vorgesehen ist, wobei
- bei einer Funktionsstörung des ersten elektrischen Bremskreises die wenigstens eine, dem ersten Bremsaktuator zugeordnete Bremskrafterzeugungseinrichtung vom Parkbremsmodul und das Anhängersteuermodul vom zweiten Bremsaktuator oder vom Parkbremsmodul druckmittelgesteuert ist, und dass
- bei einer Funktionsstörung des zweiten elektrischen Bremskreises der wenigstens eine zweite Bremsaktuator vom Anhängersteuermodul druckmittelgesteuert ist.

Die Erfindung basiert daher auf dem Gedanken, dass das heutzutage in modemen Zugfahrzeugen ohnehin übliche Parkbremsmodul und Anhängersteuermodul genutzt werden, um deren Ausgangsdrücke als Steuerdrücke für den Radbremsen zugeordneten Druckregelmoduln zu verwenden, falls der dem entsprechenden Druckregelmodul zugeordnete elektrische Bremskreis ausfällt. Umgekehrt kann aber auch ein Druckregelmodul das Anhängersteuermodul druckmittelsteuern, wenn der ansonsten für die Steuerung zuständige elektrische Bremskreis ausfällt. Somit ergibt sich eine flexible Ausfalllogik, welche auf eine Vielzahl von Bremssystemvarianten angewendet werden kann.

Insbesondere ist von den Komponenten der wenigstens zwei elektrischen Bremskreise, nämlich elektronisches Steuergerät, Kanal des elektronischen Bremspedals sowie Energieversorgung keine Komponente auch in einem anderen elektrischen Bremskreis enthalten. Dann wirkt sich der Ausfall einer Komponente eines elektrischen Bremskreises nicht auf den oder die anderen elektrischen Bremskreise aus, so dass bedingt durch die erfindungsgemäße Druckmittelsteuerung der elektro-pneumatischen oder elektro-hydraulischen Einheiten, deren elektrische Steuerung ausgefallen ist, durch eine von einem funktionsfähigen elektrischen Bremskreis gesteuerte elektro-pneumatische oder elektro-hydraulische Einheit alle Radbremsen weiterhin funktionstüchtig bleiben. Nicht zuletzt können die elektrischen Komponenten der Bremskreise wie beispielsweise das elektronische Bremspedal, die elektronischen Steuergeräte oder die Energieversorgungen im Fahrerhaus des Zugfahrzeugs mit geringem Aufwand installiert werden, weil diese Komponenten lediglich durch elektrische Leitungen mit den entsprechenden elektro-pneumatischen oder elektro-hydraulischen Einheiten verbunden werden müssen, ohne dass pneumatische oder hydraulische Leitungen verlegt werden müssten, was die Montage besonders bei üblicherweise kippbaren Fahrerhäusem von Zugmaschinen stark vereinfacht.

Durch die in den Unteransprüchen aufgeführten Maßnahmen sind vorteilhafte Weiterbildungen und Verbesserungen der im Anspruch 1 angegebenen Erfindung möglich.

Gemäß einer ersten Ausführungsform ist zur Druckmittelsteuerung des zweiten Bremsaktuators durch das Anhängersteuermodul und umgekehrt wenigstens eine Druckmittelverbindung zwischen dem zweiten Bremsaktuator und dem Anhängersteuermodul vorgesehen.

Zur Realisierung dieser Maßnahme ist zur Druckmittelsteuerung des Anhängersteuermoduls bei gestörtem ersten elektrischen Bremskreis eine Druckmittelverbindung zwischen einem mit modulierten Druck versorgtem Druckausgang des zweiten Bremsaktuators und einem pneumatischen Steuereingang des Anhängersteuermoduls vorgesehen.

Darüber hinaus kann zur Steuerung des zweiten Bremsaktuators bei gestörtem zweiten elektrischen Bremskreis wenigstens eine weitere Druckmittelverbindung zwischen einem mit modulierten Druck versorgtem Druckausgang des Anhängersteuermoduls und einem Druckmittelsteuereingang des zweiten Bremsaktuators vorgesehen sein.

Nicht zuletzt kann zur Druckmittelsteuerung der dem ersten Bremsaktuator zugeordneten Bremskrafterzeugungseinrichtung bei gestörtem ersten elektrischen Bremskreis wenigstens eine Druckmittelverbindung zwischen einem mit moduliertem Druck versorgtem Druckausgang des Parkbremsmoduls und wenigstens einem Druckeingang der Bremskrafterzeugungseinrichtung vorgesehen sein.

Gemäß einer weiteren Ausführungsform kann zur Druckmittelsteuerung des Anhängersteuermoduls durch das Parkbremsmodul bei gestörtem ersten elektrischen Bremskreis eine Druckmittelverbindung zwischen dem Parkbremsmodul und dem Anhängersteuermodul vorgesehen sein. Dann kann gegenüber der ersten Ausführungsform eine der Druckmittelverbindungen zwischen dem zweiten Bremsaktuator und dem Anhängersteuermodul eingespart werden.

Eine besonders platzsparende Anordnung sowie eine einfache Fertigung und Montage ergeben sich, wenn das zweite elektronische Steuergerät in das Parkbremsmodul integriert ist.

Besonders bevorzugt ist die der Parkbremse zugeordnete Bremskrafterzeugungseinrichtung die dem ersten Bremsaktuator zugeordnete Bremskrafterzeugungseinrichtung, die wenigstens einen Federspeicherbremszylinder beinhaltet. Insbesondere kann der erste Bremskreis ein Hinterachsbremskreis und der zweite Bremskreis ein Vorderachsbremskreis sein.

Besonders bevorzugt ist das elektronisch geregelte Bremssystem ein elektro-pneumatisches Bremssystem. Für eine Anwendung der Erfindung ist aber auch ein elektro-hydraulisches Bremssystem denkbar.

Genaueres geht aus der nachfolgenden Beschreibung von Ausführungsbeispielen hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig. 1: ein Schaltschema eines elektronisch geregelten Nutzfahrzeugsbremssystems gemäß einer ersten Ausführungsform der Erfindung.
- Fig. 2: das Schaltschema von Fig.1 in einem ungestörten Betriebsmodus;
- Fig. 3: das Schaltschema von Fig.1 in einem Betriebsmodus, in dem ein erster elektrischer Bremskreis gestört ist;
- Fig. 4: das Schaltschema von Fig.1 in einem Betriebsmodus, in dem ein zweiter elektrischer Bremskreis gestört ist;
- Fig.5: ein Schaltschema eines Nutzfahrzeugsbremssystems gemäß einer weiteren Ausführungsform der Erfindung;
- Fig.6: ein Schaltschema eines Nutzfahrzeugsbremssystems gemäß einer weiteren Ausführungsform der Erfindung;
- Fig.7: ein Schaltschema eines Nutzfahrzeugsbremssystems gemäß einer weiteren Ausführungsform der Erfindung;
- Fig.8: ein Schaltschema eines Nutzfahrzeugsbremssystems gemäß einer weiteren Ausführungsform der Erfindung.

### Beschreibung der Ausführungsbeispiele

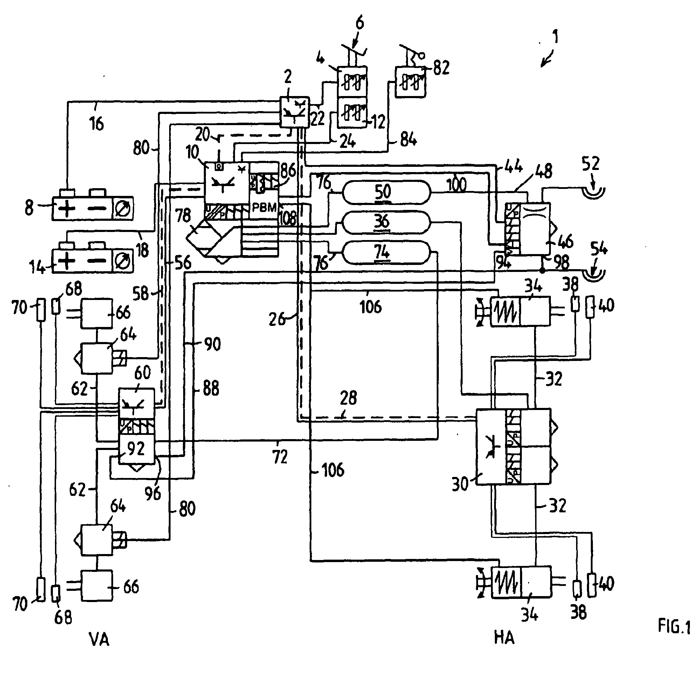

Die in Fig.1 gezeigte, erste Ausführungsform einer elektronisch geregelten Bremseinrichtung 1 nutzt bevorzugt Druckluft als Druckmedium und ist für eine zweiachsige Zugmaschine mit Anhängerbetrieb vorgesehen.

Die Bremseinrichtung 1 umfasst bevorzugt einen ersten elektrischen Bremssteuerkreis und einen zweiten elektrischen Bremssteuerkreis, wobei der erste elektrische Bremssteuerkreis ein erstes elektronisches Steuergerät 2, einen ersten Kanal 4 eines elektronischen Bremspedals 6 sowie eine erste elektrische Energieversorgung 8 und der zweite elektrische Bremssteuerkreis ein zweites elektronisches Steuergerät 10, einen zweiten Kanal 12 des elektronischen Bremspedals 6 sowie eine von der ersten Energieversorgung 8 unabhängige zweite elektrische Energieversorgung 14 aufweist. Die beiden Energieversorgungen 8 und 14 können gemeinsame Komponenten aufweisen, wesentlich ist nur, dass ein Fehler in einer Komponente nicht dazu führen darf, dass beide Energieversorgungen 8 und 14 gleichzeitig ausfallen.

Dabei wird das erste elektronische Steuergerät 2 über eine elektrische Versorgungsleitung 16 von der ersten elektrischen Energieversorgung 8 und das zweite elektronische Steuergerät 10 über eine elektrische Versorgungsleitung 18 von der zweiten elektrischen Energieversorgung 14 versorgt und die beiden elektronischen Steuergeräte 2, 10 sind zum Informationsaustausch und Überwachung der Funktionen der Bremssteuerkreise beispielsweise per Datenbus 20 verbunden und ausgebildet. Dabei ist das erste Steuergerät 2 bevorzugt ein zentrales Steuergerät, welches gegenüber dem zweiten Steuergerät 10 einen größeren Funktionsumfang aufweist. Die Funktionen können aber auch gleichwertig auf beide Steuergeräte 2, 10 verteilt sein.

Im weiteren ist das erste Steuergerät 2 über eine elektrische Leitung 22 an den ersten Kanal 4 des elektronischen Bremspedals 6 und das zweite Steuergerät 10 über eine elektrische Leitung 24 an den zweiten Kanal 12 des elektronischen Bremspedals 6 zum Einsteuern von Bremsanforderungssignalen angeschlossen.

Das dem ersten elektrischen Bremskreis zugeordnete erste Steuergerät 2 steuert über eine elektrische Versorgungsleitung 26 und über eine digitale Datenleitung 28 einen ersten elektro-pneumatischen Bremsaktuator 30 an, beispielsweise in Form eines zweikanaligen elektro-pneumatischen Druckregelmoduls, welcher beispielsweise den Radbremsen der Hinterachse HA zugeordnet ist. Über pneumatische Leitungen 32 steht das der Hinterachse HA zugeordnete 2-Kanal-Druckregelmodul 30 dazu mit Kombizylindern 34 als Bremskrafterzeugungseinrichtung der Hinterachse HA in Verbindung, wobei ein Kanal für die Räder der rechten Seite und ein Kanal für die Räder der linken Seite vorgesehen ist. Bevorzugt bedient der erste elektrische Bremskreis daher die Bremsen der Hinterachse HA. Ein solcher Kombizylinder 34 beinhaltet in bekannter Weise einen aktiven Betriebsbremszylinder, der bei Belüftung zuspannt und bei Entlüftung löst sowie einen passiven Federspeicherbremszylinder, der bei Entlüftung zuspannt und bei Belüftung löst. Die Federspeicherbremszylinder werden für die Parkbremse und für die Notbremse verwendet, für den Fall von Störungen bei der Ansteuerung der Betriebsbremszylinder. Mit Vorratsdruckluft wird das erste Druckregelmodul 30 aus einem bevorzugt eigenen Hinterachsdruckluftreservoir 36 versorgt. Über jeweils einen radseitigen Verschleißsensor 38 und Radgeschwindigkeitssensor 40 erhält die Steuerelektronik des ersten Druckregelmoduls 30 Rückmeldung über die Drehgeschwindigkeit der Räder der Hinterachse, um beispielsweise ABS-, ASR- oder ESP-Funktionen zu realisieren, und Rückmeldung über den Verschleißzustand der Radbremsen. In das Druckregelmodul 30 integrierte Drucksensoren u/p messen den in dem jeweiligen Kanal herrschenden Bremsdruck und melden ihn an die integrierte Steuerelektronik zur Einregelung des vom elektronischen Bremspedal 6 vorgegebenen Sollbremsdrucks.

Weiterhin ist ein von dem dem ersten elektrischen Bremskreis zugeordneten ersten elektronischen Steuergerät 2 über eine elektrische Leitung 44 angesteuertes elektro-pneumatisches Anhängersteuermodul 46 zum Aussteuern wenigstens eines pneumatischen Steuersignals an eine Anhängerbremse vorgesehen. Das Anhängersteuermodul 46 wird eingangsseitig über eine Vorratsdruckleitung 48 mit Vorratsdruckluft aus einem eigenen Anhängerdruckluftreservoir 50 mit Druckluft versorgt. Andererseits versorgt das Anhängersteuermodul 46 ausgangsseitig einen Kupplungskopf "Vorrat" 52 mit Vorratsdruckluft und einen Kupplungskopf "Bremse" 54 mit Steuerdruckluft zum pneumatischen Steuern der Anhängerbremsen.

Das dem zweiten elektrischen Bremskreis zugeordnete zweite Steuergerät 10 steuert über eine elektrische Versorgungsleitung 56 und über eine digitale Datenleitung 58 einen zweiten elektro-pneumatischen Bremsaktuator 60 an, beispielsweise in Form eines einkanaligen elektro-pneumatischen Druckregelmoduls, welcher der Vorderachse VA zugeordnet ist. Bevorzugt bedient der zweite elektrische Bremskreis daher die Bremsen der Vorderachse. Über pneumatische Leitungen 62 steht das der Vorderachse VA zugeordnete Druckregelmodul 60 mit ABS-Ventilen 64 in Verbindung, welche aktive Betriebsbremszylinder als Bremskrafterzeugungseinrichtung 66 der Vorderachse VA mit Bremsdruck versorgt. Über jeweils einen Verschleißsensor 68 und einen Radgeschwindigkeitssensor 70 erhält die Steuerelektronik des zweiten Druckregelmoduls 60 Rückmeldung über die Drehgeschwindigkeit der Räder der Vorderachse VA und über den dort herrschenden Verschleißzustand der Bremsen. Ein integrierter Drucksensor u/p misst wiederum den ausgesteuerten Bremsdruck, welcher in dem den ABS-Ventilen 64 vorgelagerten Bereich der Leitungen 62 für beide Seiten zunächst gleich hoch ist. Das 1-Kanal-Druckregelmodul 60 der Vorderachse VA wird über eine Vorratsdruckleitung 72 von einem bevorzugt eigenen Vorderachsdruckluftreservoir 74 mit Druckluft versorgt. Das Vorderachsdruckluftreservoir 74, das Hinterachsdruckluftreservoir 36 sowie das Anhängerdruckluftreservoir 50 stehen über pneumatische Verbindungen 76 mit einer von einer separaten elektronischen Steuerung gesteuerten Druckluftversorgungseinheit 78 in Verbindung. Die ABS-Ventile 64 der Vorderachse VA werden über elektrische Leitungen 80 bevorzugt von dem dem ersten Bremskreis zugeordneten ersten Steuergerät 2 angesteuert.

Zum Steuern der Parkbremse ist eine vorzugsweise per Hand bedienbare Parkbremsbedieneinheit 82 vorgesehen, die über eine elektrische Leitung 84 ein elektro-pneumatisches Parkbremsmodul 86 ansteuert, welches neben elektromagnetischen Ventilen ein eigenes Steuergerät beinhaltet. Bevorzugt ist das zweite Steuergerät 10 in dem Parkbremsmodul 86 integriert und bildet dessen Steuergerät integral aus, so dass die Steuerbefehle zum Zuspannen und Lösen der Parkbremse von diesem zweiten Steuergerät 10 an die weiteren Komponenten der Parkbremseinrichtung ausgesteuert werden. Weiterhin ist das zweite Steuergerät 10 zusammen mit dem Parkbremsmodul 86 und der Druckluftversorgungseinheit 78 bevorzugt in einer einzigen Baueinheit integriert.

Besonders bevorzugt ist zur Realisierung einer gegenseitigen pneumatischen Steuerungsmöglichkeit wenigstens eine pneumatische Verbindung 88, 90 zwischen dem zweiten, der Vorderachse VA zugeordneten Druckregelmodul 60 und dem Anhängersteuermodul 46 vorgesehen.

Im einzelnen ist dabei eine pneumatische Verbindung 88 zwischen einem mit modulierten Druck, wie er zur Einsteuerung in die ABS-Ventile 64 vorgesehen ist, versorgtem Druckausgang 92 des zweiten Druckregelmoduls 60 und einem Steuereingang 94 des Anhängersteuermoduls 46 vorhanden, so dass das Anhängersteuermodul 46 mit der Vorderachse zugeordneter Steuerdruckluft pneumatisch gesteuert werden kann.

Darüber hinaus ist eine weitere pneumatische Verbindung 90 zwischen einem pneumatischen Steuereingang 96 des zweiten Druckregelmoduls 60 und dem zum Kupplungskopf "Bremse" 54 führenden Druckausgang 98 des Anhängersteuermoduls 46 vorhanden, so dass das zweite Druckregelmodul 60 auch mit vom Anhängersteuermodul 46 ausgesteuerter Steuerdruckluft pneumatisch gesteuert werden kann.

Zur pneumatischen Steuerung der dem ersten Bremsaktuator 30 zugeordneten Bremskrafterzeugungseinrichtung in Form der Kombizylinder 34 bei gestörtem ersten elektrischen Bremskreis ist weiterhin eine pneumatische Verbindung 106 zwischen einem mit moduliertem Druck versorgtem Druckausgang 108 des Parkbremsmoduls 86 und den Kombizylindern 34 vorgesehen. Nicht zuletzt steuert das Parkbremsmodul 86 über eine pneumatische Leitung 100 das Anhängersteuermodul 46 an, um die Parkbremse des Anhängers zu steuern.

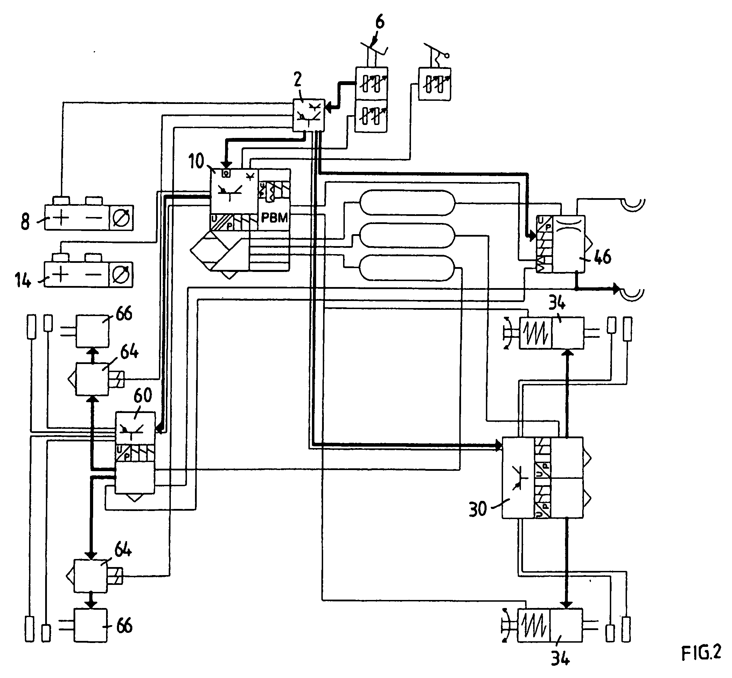

Vor diesem Hintergrund ist die Funktionsweise der Bremseinrichtung 1 wie folgt: Die elektronische Steuerung der Druckluftversorgungseinheit 78 steuert vor dem Fahrzeugstart den Luftdruck in den Druckluftvorräten 36, 50, 74. Falls genügend Energie in den Energieversorgungen 8 und 14 vorhanden ist, kann der Fahrer das elektronische Bremspedal 6 betätigen und damit Bremsanforderungssignale in das erste elektronische Steuergerät 2 und gleichzeitig in das zweite elektronische Steuergerät 10 einsteuern. Beide Steuergeräte 2, 10 führen im normalen Betrieb gemäß Fig.2 ihre Funktionen parallel aus und überwachen einander gegenseitig mittels ihrer Datenverbindung 20. Beide Steuergeräte 2, 10 senden auch die gleichen Bremsanforderungssignale aus ihren Ausgangsanschlüssen über die Leitungen 26, 28 bzw. 56, 58 zu den Bremsaktuatoren 30, 60. Folglich werden der erste elektrische Bremssteuerkreis und der zweite elektrische Bremssteuerkreis in gleicher Weise parallel aktiviert. Demzufolge modulieren der erste und der zweite Bremsaktuator 30, 60 abhängig von den an ihren elektrischen Steueranschlüssen anstehenden Bremssollwerten pneumatische Bremsdrücke aus dem jeweiligen Vorratsdruck. Diese Bremsdrücke werden in die zugeordneten Bremskrafterzeugungseinrichtungen 34, 66 eingesteuert. Im Falle der Vorderachse VA sorgen die dem zweiten Druckregelmodul 60 nachgeordneten und radbezogenen ABS-Ventile 64 für eine radindividuelle Schlupfregelung. In Fig.2 sind die elektrischen und pneumatischen Signalwege für eine Bremsung mit intakten Bremskreisen durch dicke Pfeile gekennzeichnet.

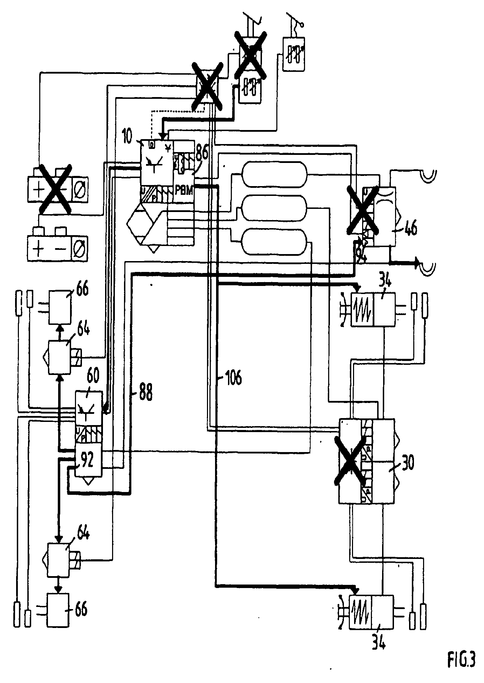

Wenn nun im ersten elektrischen Bremssteuerkreis ein Fehler auftritt, beispielsweise dadurch, dass die erste Energieversorgung 8 ausfällt, so wird demzufolge auch das erste Steuergerät 2 außer Betrieb gesetzt, wie durch das Kreuz in Fig.3 symbolisiert ist. Anstatt durch das ausgefallene erste Steuergerät 2 wird das Anhängersteuermodul 46 nun mittels der pneumatischn Verbindung 88 durch das zweite Druckregelmodul 60 pneumatisch gesteuert, welches ja von dem weiterhin intakten zweiten elektrischen Bremskreis und insbesondere durch das weiterhin intakte zweite elektronische Steuergerät 10 elektrisch gesteuert wird. Weiterhin ist auch das ansonsten vom ersten Steuergerät 2 elektrisch gesteuerte erste Druckregelmodul 30 funktionslos, wie das Kreuz in Fig.3 symbolisiert. Jedoch werden die ansonsten von diesem ersten Druckregelmodul 30 gesteuerten Kombizylinder 34 der Hinterachse HA nun vom zweiten Druckregelmodul 60 gemeinsam pneumatisch mit Bremsdruck versorgt. Schließlich sorgt das vom intakten zweiten elektrischen Bremssteuerkreis gesteuerte zweite Druckregelmodul 60 zwar für eine Erzeugung eines modulierten Bremsdrucks aus dem Vorratsdruck, jedoch ist dieser Bremsdruck nun wegen des ausgefallenen ersten elektrischen Bremskreises, von dem die ABS-Ventile 64 der Vorderachse VA gesteuert werden, nun nicht mehr radindividuell anpassbar. Als Ersatz wirkt eine select-high oder select-low-Regelung oder auch eine andere Schlupfregelung, die dann von der Steuerelektronik des zweiten Druckregelmoduls 60 durchgeführt wird. Die elektrischen und die pneumatischen Signalflüsse bei gestörtem erstem elektrischen Bremssteuerkreis sind in Fig.3 wiederum durch dicke Pfeile gekennzeichnet.

Weiterhin wird die dem ersten Bremsaktuator 30 zugeordnete Bremskrafterzeugungseinrichtung in Form der Kombizylinder 34 bei gestörtem ersten elektrischen Bremskreis durch die pneumatische Verbindung 106 vom Parkbremsmodul 86 mit Bremsdruck versorgt.

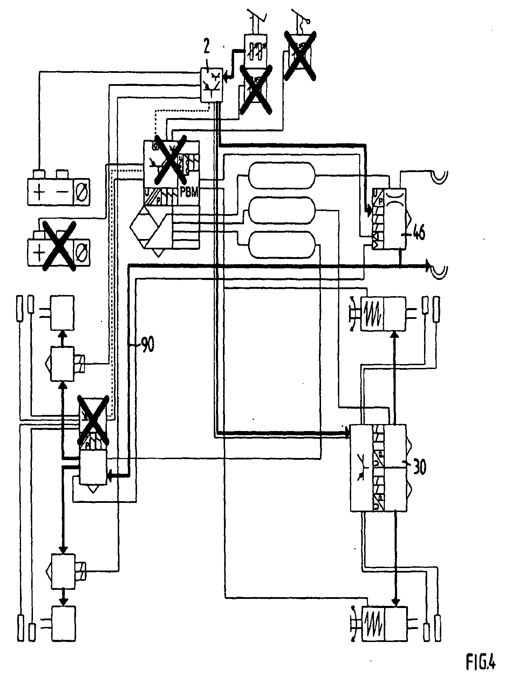

Wenn andererseits der zweite elektrische Bremskreis fehlerbehaftet ist, weil beispielsweise die zweite Energieversorgung 14 ausfällt, so wird auch das Parkbremsmodul 86, das zweite Druckregelmodul 60 und auch die elektrische Parkbremsbedieneinheit 82 außer Betrieb gesetzt, was in Fig.4 durch die Kreuze symbolisiert ist. In diesem Fall ist also die Parkbremse außer Funktion. Jedoch wird das der Vorderachse VA zugeordnete zweite Druckregelmodul 60 vom Anhängersteuermodul 46 durch die pneumatische Verbindung 90 pneumatisch gesteuert, da der erste elektrische Bremssteuerkreis weiterhin intakt ist und folglich das Anhängersteuermodul 46 weiterhin elektrisch ansteuern kann, um an den Kupplungskopf "Bremse" 54 einen entsprechenden Steuerdruck auszusteuem. Die vom intakten ersten Steuergerät 2 elektrisch angesteuerten ABS-Ventile 64 funktionieren ebenfalls, so dass weiterhin in den Betriebsbremszylindern 66 der Vorderachse VA trotz eines nur einkanaligen zweiten Druckregelmoduls 60 radindividuelle Bremsdrücke erzeugt werden können.

Weiterhin wird auch das erste Druckregelmodul 30 durch das erste Steuergerät 2 weiterhin elektrisch angesteuert, so dass insgesamt die Betriebsbremsen 34, 66 an Vorder- und Hinterachse einsatzfähig bleiben.

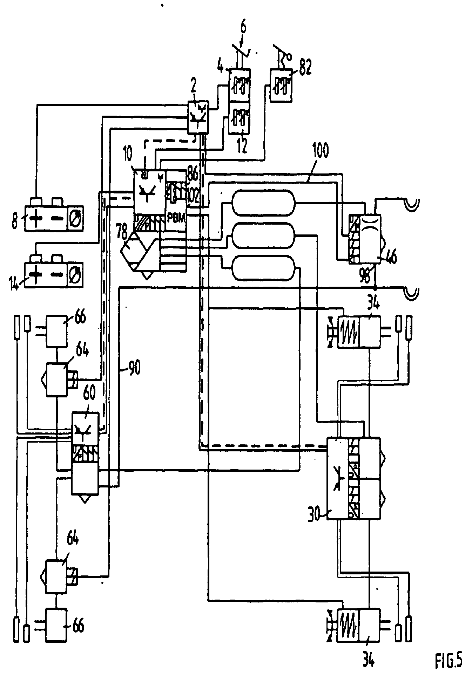

Bei den weiteren Ausführungsbeispielen nach Fig.5 bis Fig.8 sind die gegenüber dem vorangehenden Ausführungsbeispiel gleich bleibenden und gleich wirkenden Teile durch die gleichen Bezugszeichen gekennzeichnet.

Im Unterschied zur Ausführungsform gemäß Fig.1 steuert bei der Ausführungsform von Fig.5 mangels einer entsprechenden pneumatischen Verbindung (88 in Fig.1) das zweite Druckregelmodul 60 nicht mehr das Anhängersteuermodul 46 für den Fall an, dass der erste elektronische Bremskreis ausfällt. Vielmehr wird das Anhängersteuermodul 46 dann durch das Parkbremsmodul 86 bei gestörtem ersten elektrischen Bremskreis pneumatisch gesteuert, um die Bremsen des Anhängers zu steuern, wozu die pneumatische Verbindung 100 zwischen einem pneumatischen Druckausgang 102 des Parkbremsmoduls 86 und einem pneumatischen Steuereingang 104 des Anhängersteuermoduls 46 vorgesehen ist. Ansonsten werden die beim vorangehenden Ausführungsbeispiel beschriebenen Funktionen auch bei diesem Ausführungsbeispiel ausgeführt.

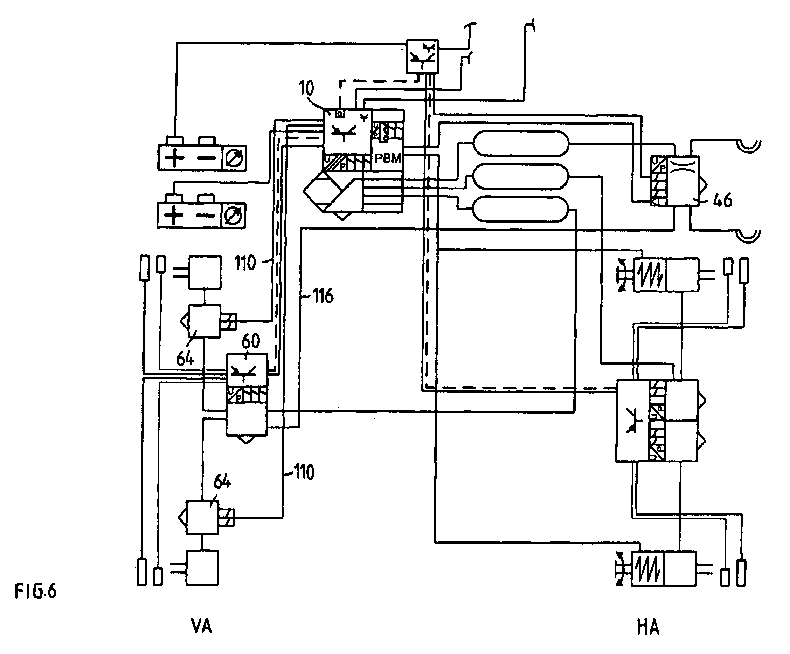

Im Unterschied zur Ausführungsform gemäß Fig.1 werden bei der Ausführungsform von Fig.6 die ABS-Ventile 64 der Vorderachse VA nicht vom dem ersten Bremskreis zugeordneten ersten Steuergerät 2 sondern vom dem zweiten Bremskreis zugeordneten Steuergerät 10 über elektrische Steuerleitungen 110 angesteuert.

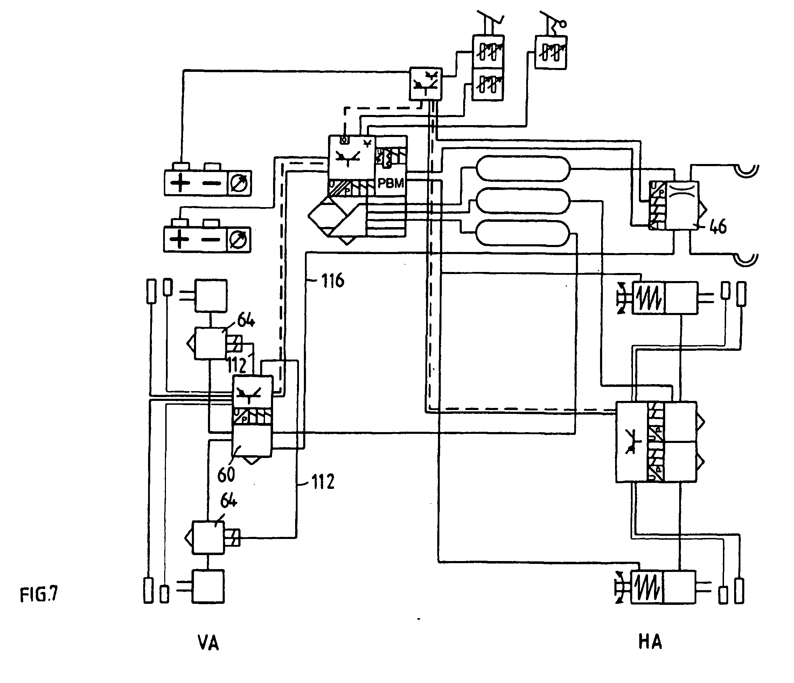

Bei der Ausführungsform von Fig.7 erfolgt die Ansteuerung der ABS-Ventile der Vorderachse VA hingegen durch das der Vorderachse VA zugeordnete Druckregelmodul 60 mittels entsprechender elektrischer Steuerleitungen 112.

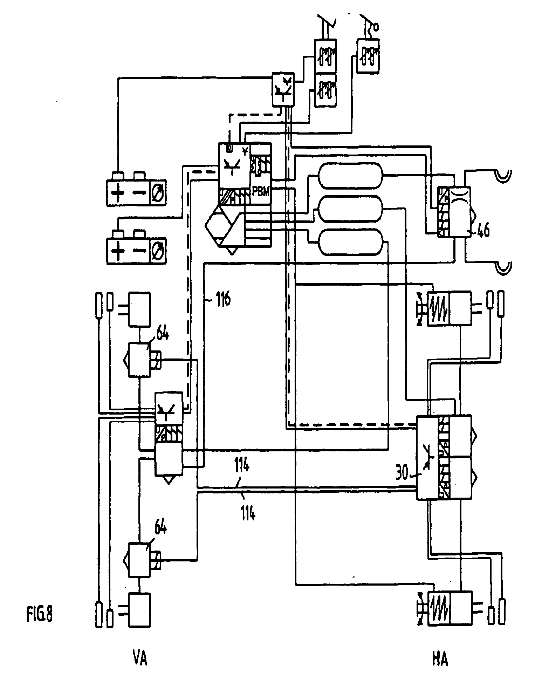

Schließlich steuert das dem ersten Bremskreis oder der Hinterachse HA zugeordnete Druckregelmodul 30 die ABS-Ventile 64 der Vorderachse VA gemäß der Ausführungsform von Fig.8 durch entsprechende elektrische Steuerleitungen 114 an.

Den Ausführungsformen gemäß Fig.6 bis Fig.8 ist gemeinsam, dass zwischen dem Anhängersteuermodul 46 und dem der Vorderachse VA zugeordneten Druckregelmodul 60 anstatt zwei pneumatische Verbindungen 88 und 90 lediglich eine einzige pneumatische Verbindung 116 gezogen ist, durch welche das Anhängersteuermodul 46 das Druckregelmodul 60 steuern kann und ümgekehrt.

### Bezugszahlentabelle

- 1: Bremseinrichtung
- 2: erstes Steuergerät
- 4: erster Kanal
- 6: Bremspedal
- 8: erste Energieversorgung
- 10: zweites Steuergerät
- 12: zweiter Kanal
- 14: zweite Energieversorgung
- 16: Versorgungsleitung
- 18: Versorgungsleitung
- 20: Datenbus
- 22: elektrische Leitung
- 24: elektrische Leitung
- 26: elektrische Versorgungsleitung
- 28: digitale Datenleitung
- 30: erster Bremsaktuator
- 32: pneumatische Leitungen
- 34: Kombizylinder
- 36: Hinterachsdruckluftreservoir
- 38: Verschleißsensor
- 40: Radgeschwindigkeitssensor
- 44: elektrische Leitung
- 46: Anhängersteuermodul
- 48: Vorratsdruckleitung
- 50: Anhängerdruckluftreservoir
- 52: Kupplungskopf "Vorrat"
- 54: Kupplungskopf "Bremse"
- 56: elektrische Versorgungsleitung
- 58: digitale Datenleitung
- 60: zweiter Bremsaktuator
- 62: pneumatische Leitungen
- 64: ABS-Ventil
- 66: Bremskrafterzeugungseinrichtung
- 68: Verschleißsensor
- 70: Radgeschwindigkeitssensor
- 72: Vorratsdruckleitung
- 74: Vorderachsdruckluftreservoir
- 76: pneumatische Verbindungen
- 78: Druckluftversorgungseinheit
- 80: elektrische Leitungen
- 82: Parkbremsbedieneinheit
- 84: elektrische Leitung
- 86: Parkbremsmodul
- 88: pneumatische Verbindung
- 90: pneumatische Verbindung
- 92: Druckausgang
- 94: Steuereingang
- 96: Steuereingang
- 98: Druckausgang
- 100: pneumatische Verbindung
- 102: pneumatischer Druckausgang
- 104: pneumatischer Steuereingang
- 106: pneumatische Verbindung
- 108: Druckausgang
- 110: elektrische Steuerleitung
- 112: elektrische Steuerleitung
- 114: elektrische Steuerleitung
- 116: pneumatische Verbindung

## Patentansprüche

1. Elektronisch geregeltes Bremssystem (1) eines für den Anhängerbetrieb vorgesehenen Zugfahrzeugs, welches mindestens einen ersten elektrischen Bremssteuerkreis und einen zweiten elektrischen Bremssteuerkreis umfasst, wobei
a) der erste elektrische Bremssteuerkreis wenigstens ein erstes elektronisches Steuergerät (2), wenigstens einen ersten Kanal (4) eines elektronischen Bremspedals (6) sowie eine erste elektrische Energieversorgung (8) und der zweite elektrische Bremssteuerkreis wenigstens ein zweites elektronisches Steuergerät (10), wenigstens einen zweiten Kanal (12) des elektronischen Bremspedals (6) sowie eine von der ersten elektrischen Energieversorgung (8) unabhängige zweite elektrische Energieversorgung (14) aufweist,
b) das erste elektronische Steuergerät (2) von der ersten Energieversorgung (8) und das zweite elektronische Steuergerät (10) von der zweiten Energieversorgung (14) versorgt ist und die beiden elektronischen Steuergeräte (2, 10) zum Informationsaustausch und Überwachung der Funktion der Bremssteuerkreise verbunden und ausgebildet sind,
c) das erste Steuergerät (2) an den ersten Kanal (4) des elektronischen Bremspedals (6) und das zweite Steuergerät (10) an den zweiten Kanal (12) des elektronischen Bremspedals (6) zum Einsteuern von Bremsanforderungssignalen angeschlossen ist,
d) das erste Steuergerät (2) wenigstens einen ersten Bremsaktuator (30) und das zweite Steuergerät (10) wenigstens einen zweiten Bremsaktuator (60) ansteuert, wobei die Bremsaktuatoren (30, 60) jeweils mindestens eine zugeordnete Bremskrafterzeugungseinrichtung (34, 66) mit Bremsdruck versorgen,
e) ein von dem ersten elektronischen Steuergerät (2) angesteuertes Anhängersteuermodul (46) zum Aussteuern wenigstens eines DruckmittelSteuersignals an eine Anhängerbremse vorgesehen ist,
f) ein von einem elektronischen Steuergerät (10) gesteuertes, Parkbremsmodul (86) zum Steuern einer der Parkbremse zugeordneten Bremskrafterzeugungseinrichtung (34) vorgesehen ist,
**dadurch gekennzeichnet, dass**
g) bei einer Funktionsstörung des ersten elektrischen Bremskreises die wenigstens eine, dem ersten Bremsaktuator (30) zugeordnete Bremskrafterzeugungseinrichtung (34) vom Parkbremsmodul (86) und das Anhängersteuermodul (46) vom zweiten Bremsaktuator (60) oder vom Parkbremsmodul (86) druckmittelgesteuert ist, und dass
h) bei einer Funktionsstörung des zweiten elektrischen Bremskreises der wenigstens eine, zweite Bremsaktuator (60) vom Anhängersteuermodul (46) druckmittelgesteuert ist.

2. Bremssystem nach Anspruch 1, **dadurch gekennzeichnet, dass** zur Druckmittelsteuerung des Anhängersteuermoduls (46) durch das Parkbremsmodul (86) bei gestörtem ersten elektrischen Bremskreis wenigstens eine Druckmittelverbindung (100) zwischen dem Parkbremsmodul (86) und dem Anhängersteuermodul (46) vorgesehen ist.

3. Bremssystem nach Anspruch 1, **dadurch gekennzeichnet, dass** zur Druckmittelsteuerung des zweiten Bremsaktuators (60) durch das Anhängersteuermodul (46) und umgekehrt wenigstens eine Druckmittelverbindung (88, 90; 116) zwischen dem zweiten Bremsaktuator (60) und dem Anhängersteuermodul (46) vorgesehen ist.

4. Bremssystem nach Anspruch 3, **dadurch gekennzeichnet, dass** zur Druckmittelsteuerung des Anhängersteuermoduls (46) bei gestörtem ersten elektrischen Bremskreis eine Druckmittelverbindung (88) zwischen einem mit modulierten Druck versorgtem Druckausgang (92) des zweiten Bremsaktuators (60) und einem Druckmittelsteuereingang (94) des Anhängersteuermoduls (46) vorgesehen ist.

5. Bremssystem nach einem der vorhergehenden Ansprüche, **dadurch gekennzeichnet, dass** zur Druckmittelsteuerung des zweiten Bremsaktuators (60) bei gestörtem zweiten elektrischen Bremskreis wenigstens eine Druckmittelverbindung (90) zwischen einem mit modulierten Druck versorgtem Druckausgang (98) des Anhängersteuermoduls (46) und einem Druckmittelsteuereingang (96) des zweiten Bremsaktuators (60) vorgesehen ist.

6. Bremssystem nach einem der vorhergehenden Ansprüche, **dadurch gekennzeichnet, dass** zur Druckmittelsteuerung der dem ersten Bremsaktuator (30) zugeordneten Bremskrafterzeugungseinrichtung (34) bei gestörtem ersten elektrischen Bremskreis wenigstens eine Druckmittelverbindung (106) zwischen einem mit moduliertem Druck versorgtem Druckausgang (108) des Parkbremsmoduls (86) und dieser Bremskrafterzeugungseinrichtung (34) vorgesehen ist.

7. Bremssystem nach einem der vorhergehenden Ansprüche, **dadurch gekennzeichnet, dass** das zweite elektronische Steuergerät (10) in das Parkbremsmodul (86) integriert ist.

8. Bremssystem nach Anspruch 7, **dadurch gekennzeichnet, dass** das zweite elektronische Steuergerät (10) die Funktionen der Parkbremse steuert.

9. Bremssystem nach wenigstens einem der vorhergehenden Ansprüche, **dadurch gekennzeichnet, dass** die der Parkbremse zugeordnete Bremskrafterzeugungseinrichtung (34) die dem ersten Bremsaktuator (30) zugeordnete Bremskrafterzeugungseinrichtung ist.

10. Bremssystem nach Anspruch 9, **dadurch gekennzeichnet, dass** die der Parkbremse zugeordnete Bremskrafterzeugungseinrichtung (34) wenigstens einen Federspeicherbremszylinder beinhaltet.

11. Bremssystem nach wenigstens einem der vorhergehenden Ansprüche, **dadurch gekennzeichnet, dass** der erste Bremskreis ein Hinterachsbremskreis und der zweite Bremskreis ein Vorderachsbremskreis ist.

12. Bremssystem nach wenigstens einem der vorhergehenden Ansprüche, **dadurch gekennzeichnet, dass** es ein elektro-pneumatisches Bremssystem mit elektro-pneumatischen Modulen (30, 46, 60, 86) ist.

## Claims

1. Electronically controlled braking system (1) in a tractor vehicle provided for operation with a trailer, which includes at least one first electrical brake control circuit and one second electrical brake control circuit, wherein
(a) said first electrical brake control circuit includes at least one first electronic controller (2), at least one first channel (4) of an electronic brake pedal, as well as one first electrical energy supply unit (8) and said second electrical brake control circuit comprises at least one second electronic controller (10), at least one second channel (12) of said electronic brake pedal (6) as well as one second electrical energy supply unit (14) independent of said first electrical energy supply unit (8),
(b) said first electronic controller (2) is supplied from said first energy supply unit (8) and said second electronic controller (10) is supplied from said second energy supply unit (14), with said two electronic controllers (2, 10) being connected and designed for exchange of information and for monitoring the function of said brake control circuits,
(c) said first controller (2) is connected to said first channel (4) of said electronic brake pedal (6) and said second controller (10) is connected to said second channel (12) of said electronic brake pedal (6) for controlling brake demand signals,
(d) said first controller (2) controls at least one first brake actuator (30) and said second controller (10) controls at least one second brake actuator (60), with said brake actuators (30, 60) supplying each at least one associated brake force generator means (34, 66) with braking pressure,
(e) one trailer control module (46) under control of said first electronic controller (2) is provided for controlling at least one compressed-medium control signal to a trailer brake,
(f) a parking brake module (86) under control of an electronic controller (10) is provided for controlling a brake force generator means (34) associated with the parking brake,
**characterised in that**
(g) in the event of a functional disorder of said first electrical braking circuit said at least one brake force generator means (34) associated with said first brake actuator (30) is controlled by means of a pressurised medium by said parking brake module (86) whilst said trailer control module (46) is controlled by means of a pressurised medium by said second brake actuator (60) or by said parking brake module (86), and that
(h) in the event of a functional disorder of said second electrical braking circuit, said at least one second brake actuator is controlled by means of a pressurised medium by said trailer control module.

2. Braking system according to Claim 1, **characterised in that** at least one pressurised-medium communication (100) is provided between said parking brake module (86) and said trailer control module (46) for control of said trailer control module (46) by said parking brake module (86) by means of a pressurised medium in the event of failure in said first electrical braking circuit.

3. Braking system according to Claim 1, **characterised in that** at least one pressurised-medium communication (88, 90; 116) is provided between said second brake actuator (60) and said trailer control module (46) for control of said second brake actuator (60) by said trailer control module (46) by means of a pressurised medium, and vice versa.

4. Braking system according to Claim 3, **characterised in that** a pressurised-medium communication (88) is provided between a pressure outlet (92) of said second brake actuator (60), which is supplied with a modulated pressure, and a pressurised-medium control input (94) of said trailer control module (46) for control of said trailer control module (46) by means of a pressurised medium in the event of failure in said first electrical braking circuit.

5. Braking system according to any of the preceding Claims, **characterised in that** at least one pressurised-medium communication (90) is provided between a pressure outlet (98) of said trailer control module (46), which is supplied with a modulated pressure, and a pressurised-medium control input (96) of said second brake actuator (60) for control of said second brake actuator (60) by means of a pressurised medium in the event of failure in said second electrical braking circuit.

6. Braking system according to any of the preceding Claims, **characterised in that** at least one pressurised-medium communication (106) is provided between a pressure outlet (108) of said parking brake module (86), which is supplied with a modulated pressure, and said brake force generator means (34) for control of the pressurised medium of said brake force generator means (34) associated with said first brake actuator (30) in the event of failure in said first electrical braking circuit.

7. Braking system according to any of the preceding Claims, **characterised in that** said second electronic controller (10) is integrated into said parking brake module (86).

8. Braking system according to Claim 7, **characterised in that** said second electronic controller (10) controls the functions of said parking brake.

9. Braking system according to at least one of the preceding Claims, **characterised in that** said brake force generator means (34) associated with said parking brake is the brake force generator means associated with said first brake actuator (30).

10. Braking system according to Claim 9, **characterised in that** said brake force generator means (34) associated with said parking brake includes at least one spring brake actuator cylinder.

11. Braking system according to at least one of the preceding Claims, **characterised in that** said first braking circuit is a rear-axle braking circuit whilst said second braking circuit is a front-axle braking circuit.

12. Braking system according to at least one of the preceding Claims, **characterised in that** it is an electro-pneumatic braking system provided with electro-pneumatic modules (30, 46, 60, 86).

## Revendications

1. Système de freinage (1) à commande électronique dans un véhicule tracteur pourvu pour l'opération avec une remorque, qui contient au moins un premier circuit de commande de freinage électrique et un deuxième circuit de commande de freinage électrique, dans lequel
(a) ledit premier circuit de commande de freinage électrique est muni d'au moins une première unité de commande électronique (2), au moins une première voie (4) d'une pédale de frein électronique, ainsi qu'une première unité d'alimentation en énergie électrique (8) et ledit deuxième circuit de commande de freinage électrique comprend au moins une deuxième unité de commande électronique (10), au moins une deuxième voie (12) de ladite pédale de frein électronique (6) ainsi qu'une deuxième unité d'alimentation en énergie (14) indépendante de ladite première unité d'alimentation en énergie (8),
(b) ladite première unité de commande électronique (2) est alimentée à partir de ladite première unité d'alimentation en énergie (8) et ladite deuxième unité de commande électronique (10) est alimentée à partir de ladite deuxième unité d'alimentation en énergie (14), auxdites deux unités de commande électronique (2, 10) étant reliées et conçues pour l'échange des informations et pour le monitorage du fonctionnement desdits circuits de commande de freinage,
(c) ladite première unité de commande (2) est raccordée à ladite première voie (4) de ladite pédale de frein électronique (6) et ladite deuxième unité de commande (10) est raccordée à ladite deuxième voie (12) de ladite pédale de frein électronique (6) afin de commander des signaux de demande de freinage,
(d) ladite première unité de commande (2) commande au moins un premier actionneur de freinage (30) et ladite deuxième unité de commande (10) commande au moins un deuxième actionneur de freinage (60), à chacun desdits actionneurs de freinage (30, 60) alimentant au moins un moyen générateur de la puissance de freinage affecté (34, 66) en pression de freinage,
(e) un module de commande de remorque (46) sous commande par ladite première unité de commande électronique (2) set pourvu pour la commande d'au moins un signal de commande de milieu sous pression à un frein de remorque,
(f) un module de freinage de stationnement (86) sous commande par une unité de commande électronique (10) est pourvu pour la commande d'un moyen générateur de la puissance de freinage (34) affecté à un frein de stationnement,
caractérisé en ce
(g) qu'au cas au cas d'une défaillance dudit premier circuit électrique de freinage, ledit au moins un moyen générateur de la puissance de freinage (34) affecté audit premier actionneur de freinage (30) est commandé moyennant un milieu sous pression per ledit module de freinage de stationnement (86), pendant que ledit module de commande de remorque (46) este commandé moyennant un milieu sous pression par ledit deuxième actionneur de freinage (60) ou par ledit module de freinage de stationnement (86), et en ce
(h) qu'au cas d'une défaillance dudit deuxième circuit électrique de freinage, ledit au moins un deuxième actionneur de freinage est commandé moyennant un milieu sous pression par ledit module de commande de remorque.

2. Système de freinage selon la revendication 1, **caractérisé en ce qu'**au moins une communication de milieu sous pression (100) est pourvue entre ledit module de freinage de stationnement (86) et ledit module de commande de remorque (46) pour la commande dudit module de commande de remorque (46) par ledit module de freinage de stationnement (86) moyennant un milieu sous pression au cas de défaillance dans ledit premier circuit électrique de freinage.

3. Système de freinage selon la revendication 1, **caractérisé en ce qu'**au moins une communication de milieu sous pression (88, 90; 116) est pourvue entre ledit deuxième actionneur de freinage (60) et ledit module de commande de remorque (46) pour la commande dudit deuxième actionneur de freinage (60) par ledit module de commande de remorque (46) moyennant un milieu sous pression, et vice versa.

4. Système de freinage selon la revendication 3, **caractérisé en ce qu'**une communication de milieu sous pression (88) set pourvue entre une sortie de pression (92) dudit deuxième actionneur de freinage (60), qui est alimentée en une pression modulée, et une entrée de milieu sous pression (94) dudit module de commande de remorque (46) pour la commande dudit module de commande de remorque (46) moyennant un milieu sous pression au cas de défaillance dans ledit premier circuit électrique de freinage.

5. Système de freinage selon une quelconque des revendications précédentes, **caractérisé en ce qu'**au moins une communication de milieu sous pression (90) est pourvue entre une sortie de pression (98) dudit module de commande de remorque (46), qui st alimentée en une pression modulée, et une entrée de milieu sous pression (96) dudit deuxième actionneur de freinage (60) pour la commande dudit deuxième actionneur de freinage (60) moyennant un milieu sous pression au cas de défaillance dans ledit deuxième circuit électrique de freinage.

6. Système de freinage selon une quelconque des revendications précédentes, **caractérisé en ce qu'**au moins une communication de milieu sous pression (106) est pourvue entre une sortie de pression (108) dudit module de freinage de stationnement (86), qui est alimentée en une pression modulée, et ledit moyen générateur de la puissance de freinage (34) pour la commande dudit du milieu sous pression dudit moyen générateur de la puissance de freinage (34) affecté audit premier actionneur de freinage (30) au cas de défaillance dans ledit premier circuit électrique de freinage.

7. Système de freinage selon une quelconque des revendications précédentes, **caractérisé en ce que** ladite deuxième unité de commande électronique (10) est intégrée dans ledit module de freinage de stationnement (86).

8. Système de freinage selon la revendication 7, **caractérisé en ce que** ladite deuxième unité de commande électronique (10) commande les fonctions dudit frein de stationnement.

9. Système de freinage selon au moins une quelconque des revendications précédentes, **caractérisé en ce que** ledit moyen générateur de la puissance de freinage (34), qui est affecté audit frein de stationnement, est le moyen générateur de la puissance de freinage affecté audit premier actionneur de freinage (30).

10. Système de freinage selon la revendication 9, **caractérisé en ce que** ledit moyen générateur de la puissance de freinage (34), qui est affecté audit frein de stationnement, renferme au moins un cylindre de frein à ressort accumulateur.

11. Système de freinage selon au moins une quelconque des revendications précédentes, **caractérisé en ce que** ledit premier circuit de freinage est un circuit de freinage de l'essieu arrière, pendant que ledit deuxième circuit de freinage est un circuit de freinage de l'essieu avant.

12. Système de freinage selon au moins une quelconque des revendications précédentes, **caractérisé en ce qu'**il est un système électropneumatique de freinage muni des modules électropneumatiques (30, 46, 60, 86).
